# EUROPÄISCHE PATENTSCHRIFT

(11) **EP 4 236 335 B1**
(45) Veröffentlichungstag und Bekanntmachung des Hinweises auf die Patenterteilung: **08.07.2026**
(21) Anmeldenummer: 23155962.6
(22) Anmeldetag: 10.02.2023
(51) Int. Cl.: H04N 23/50, H04N 23/66

(54) **VERFAHREN ZUM ANSCHLIESSEN VON KAMERAMODULEN AN EINE KAMERA**
METHOD FOR CONNECTING CAMERA MODULES TO A CAMERA
PROCÉDÉ DE CONNEXION DE MODULES DE CAMÉRA À UNE CAMÉRA

(30) Priorität: 24.02.2022 DE 102022104408
(43) Veröffentlichungstag der Anmeldung: 30.08.2023
(73) Patentinhaber: Arnold & Richter Cine Technik GmbH & Co. Betriebs KG, 80807 München (DE)
(72) Erfinder: POPP, Hermann, 81547 München (DE); ZEIDLER, Frank, 81827 München (DE); MANN, Alexander, 80686 München (DE); HAUBMANN, Michael, 1230 Wien (AT)
(74) Vertreter: Manitz Finsterwald Patent- und Rechtsanwaltspartnerschaft mbB

(56) Entgegenhaltungen:
- WO-A1-2016/134318
- US-A1- 2009 237 512
- US-A1- 2010 111 489
- US-A1- 2019 180 783
- US-A1- 2019 208 181

## Beschreibung

Die vorliegende Erfindung betrifft ein Verfahren zum Anschließen von Kameramodulen an eine Kamera.

Professionelle Filmkameras werden beispielsweise bei Film- und Fernsehproduktionen eingesetzt. Für solche Filmkameras existiert eine große Anzahl an Zubehör und Erweiterungsmodulen. Solches Zubehör kann beispielsweise Fernsteuerungen, Monitoring-Einheiten, Motoren und dergleichen umfassen.

Bei der Entwicklung von Kamera und Zubehör bestehen allerdings große Abhängigkeiten zwischen Kamera und Zubehör, da die Kamera mit dem Zubehör kommunizieren und die Funktionen des Zubehörs unterstützen muss. Um eine Interoperabilität zwischen Kamera und Zubehör sicherzustellen, ist es daher häufig notwendig, neue Software und/oder Firmware für die Kamera und/oder das Zubehör zu entwickeln. Dieser Prozess ist zeitaufwendig und verhindert eine schnelle und flexible Anbindung von verschiedenem Zubehör an die Kamera.

Aus der WO 2016/134318 A1 ist ein Verfahren gemäß dem Oberbegriff des Anspruchs 1 bekannt.

Die US 2019/180783 A1 betrifft ein Kameraarray mit einer Vielzahl von Kameramodulen. Die einzelnen Kameramodule können über ein Netzwerk angesteuert werden.

Die US 2019/208181 A1 offenbart die Erstellung von 3D Bildern mittels verschiedener Kameramodule, welche vollständige Kameras sind, die über ein Netzwerk mit einem Bildgebungsmodul verbunden sind.

Weiterhin offenbart die US 2010/111489 A1 ein digitales Kamerasystem, bei welchem die einzelnen Komponenten untereinander gekoppelt sind. Verschiedene der Kameras können über ein Ethernet-Netzwerk miteinander gekoppelt sein.

Schließlich betrifft die US 2009/237512 A1 eine von einem mobilen Gerät aus steuerbare Kamera, wobei die Berechtigung des mobilen Geräts zum Steuern der Kamera von Extern aus überprüft wird.

Es ist die der Erfindung zugrundeliegende Aufgabe, ein Verfahren zum Anschließen von Kameramodulen an eine Kamera anzugeben, welches die Inbetriebnahme von Kamerazubehör an einer Kamera vereinfacht und beschleunigt.

Diese Aufgabe wird durch ein Verfahren gemäß Anspruch 1 gelöst.

Bei dem erfindungsgemäßen Verfahren wird die Kamera mit einem ersten Kameramodul über eine Datenschnittstelle verbunden. Das erste Kameramodul überträgt ein Geräteprofil über die Datenschnittstelle an die Kamera, wobei das Geräteprofil eine Geräteklasse des ersten Kameramoduls sowie Informationen zum Funktionsumfang des ersten Kameramoduls umfasst. Zudem wird die Kamera mit einem zweiten Kameramodul über die Datenschnittstelle verbunden. Das zweite Kameramodul überträgt ein Geräteprofil über die Datenschnittstelle an die Kamera, wobei das Geräteprofil eine Geräteklasse des zweiten Kameramoduls sowie Informationen zum Funktionsumfang des zweiten Kameramoduls umfasst. Die Kamera passt ihre Betriebsparameter anhand der Geräteprofile an das erste und zweite Kameramodul an, um das erste und zweite Kameramodul in den Betrieb der Kamera einzubinden.

Anders ausgedrückt wertet die Kamera also die Geräteprofile der angeschlossenen Kameramodule aus, um z.B. den Betrieb der Kamera an die angeschlossenen Kameramodule anzupassen und gegebenenfalls auf die Kameramodule zu optimieren.

Die Kamera kann zu diesem Zweck eine Steuereinheit aufweisen, die die Geräteprofile des ersten und zweiten Kameramoduls auswertet. Die Steuereinheit kann die hierin beschriebenen Verfahrensschritte jeweils durchführen und/oder anstoßen.

Hierin wird jeweils von einem ersten Kameramodul und einem zweiten Kameramodul gesprochen. Es versteht sich, dass auch weitere zusätzliche Kameramodule über die Datenschnittstelle mit der Kamera verbunden werden können, wobei die Ausführungen für das erste und zweite Kameramodul dann entsprechend für die weiteren Kameramodule gelten.

Erfindungsgemäß wird es ermöglicht, durch eine Kapselung und/oder Beschreibung der Funktionalitäten der Kameramodule mittels der Geräteprofile ein standardisiertes Datenformat zu schaffen, wodurch ein einheitliches Format zum Austausch von Fähigkeiten und Einschränkungen zwischen der Kamera und den Kameramodulen geschaffen wird. Insbesondere teilen die Kameramodule mit dem Geräteprofil jeweils ihre Anforderungen und auch Informationen zu ihrem Funktionsumfang der Kamera mit.

Durch die Übertragung der Geräteprofile kann die Kamera dann auf nahezu beliebige und auch neue Kameramodule sinnvoll reagieren, ohne dass eine Änderung der Firm- und/oder Software der Kamera benötigt wird, wie unten noch genauer ausgeführt. Der Entwicklungsaufwand zur Integration von neuem und/oder anderem Zubehör (d.h. von Kameramodulen) kann somit deutlich gesenkt werden.

Durch das Anschließen und das Einbinden in den Betrieb der Kamera, werden das erste und zweite Kameramodul selbst Teil der Kamera. Insbesondere können das erste und/oder zweite Kameramodul die Kamera erst vollständig funktionsfähig machen, beispielsweise wenn es sich bei einem der Kameramodule um ein Objektiv oder ein Bilderfassungsmodul handelt.

Nach dem Anschließen der Kameramodule über die Datenschnittstelle kann auch ein Austausch der Geräteprofile stattfinden. Dies bedeutet, dass auch das erste und/oder zweite Kameramodul von bereits in der Kamera vorhandenen Kameramodulen die Geräteprofile über die Datenschnittstelle erhalten. Bevorzugt können dann das erste und/oder zweite Kameramodul auch ihren Betrieb an die bereits vorhandenen Kameramodule anpassen.

Zum Einbinden des ersten und zweiten Kameramoduls in den Betrieb der Kamera verändert die Kamera ihre Betriebsparameter. Die Betriebsparameter können beispielsweise das Datenformat und/oder das Protokoll festlegen, mittels welchem über die Datenschnittstelle mit dem ersten und zweiten Kameramodul kommuniziert wird. Die Betriebsparameter können aber auch beispielsweise eine Framerate und/oder oder eine Auflösung der von der Kamera erfassten Kamerabilder umfassen. Wird beispielsweise als erstes Kameramodul ein Speichermodul an die Kamera angeschlossen, welches maximal eine Auflösung von 4K bei einer Framerate von 60 FPS unterstützt, so können die Betriebsparameter dahingehend eingestellt werden, dass Kamerabilder mit einer Auflösung von 4K und einer Framerate von 60 FPS erzeugt und/oder zumindest in diesem Format an das Speichermodul übertragen werden. Grundsätzlich sind unter den Betriebsparametern sämtliche Einstellungen der Kamera zu verstehen, die Auswirkungen auf den Betrieb der Kamera besitzen können.

Durch die in dem Geräteprofil enthaltene Geräteklasse kann die Kamera ihre Betriebsparameter z.B. an ein, insbesondere vordefiniertes, Standardgerät dieser Geräteklasse anpassen. Auf diese Weise können auch neu entwickelte Kameramodule in den Betrieb der Kamera eingebunden werden, selbst wenn die neu entwickelten Kameramodule Funktionen aufweisen, die von der Kamera nicht unterstützt werden. In diesem Fall können zumindest Basisfunktionen (z.B. die Funktionen des Standardgeräts) trotzdem nutzbar sein. Zum Beispiel kann ein neuartiges Entfernungsmesssystem, welches mehrere Messpunkte aufweist, trotzdem an einer existierenden Kamera verwendet werden, da es als der Geräteklasse Entfernungsmesssystem zugehörig erkannt wird und z.B. auch einen Wert liefert, der einem existierenden Ein-Punkt Entfernungsmessgerät entspricht. Auf diese Weise kann ein Softwareupdate für Bestandsgeräte bei der Markteinführung neuer Kameramodule vermieden werden.

Durch (standardisierte) Geräteprofile wird es zudem ermöglicht, hohe Testaufwände durch das Testen aller möglichen Kombinationen von Kameras und Kameramodulen zu vermeiden. Insbesondere kann lediglich ein Testen gegen Spezifikationen in einem (standardisierten) Geräteprofil erfolgen, da die Eigenschaften der Kameramodule in dem Geräteprofil beschrieben sind und nicht allein in der Programmlogik/Software der Kamera.

Insgesamt ermöglicht die Übertragung der Geräteprofile und die anschließende Anpassung der Betriebsparameter somit das einfache, schnelle und flexible Anschließen von nahezu beliebigen Kameramodulen an die Kamera.

Bei der Kamera handelt es sich insbesondere um eine Kamera für professionelle Filmaufnahmen, insbesondere ausgebildet zur Aufnahme von Bewegtbildern (Videos), Stand- und Einzelbildern und/oder Time Lapse Aufnahmen, wobei die Kamera z.B. ein wechselbares Objektiv aufweisen kann. Die Kamera (oder das Bilderfassungsmodul) kann z.B. zur Aufnahme von Bilddaten mit einer Auflösung von zumindest 4K, 4,5K oder 8K bei Frameraten von 60 FPS, 90 FPS, 100 FPS oder 150 FPS ausgebildet sein.

Vorteilhafte Weiterbildungen der Erfindung sind der Beschreibung, den Unteransprüchen sowie den Zeichnungen zu entnehmen.

Gemäß einer ersten Ausführungsform übertragen das erste und das zweite Kameramodul die Geräteprofile über die gleiche Datenschnittstelle an die Kamera. Dies bedeutet, dass die Kameramodule eine gleichartige Datenschnittstelle verwenden, die insbesondere dasselbe Protokoll und/oder dasselbe Datenformat für die Übertragung des Geräteprofils des ersten Kameramoduls und des Geräteprofils des zweiten Kameramoduls verwendet. Allerdings kann die Datenschnittstelle mechanisch z.B. mehrere und/oder unterschiedliche Steckverbindungen für die unterschiedlichen Kameramodule aufweisen. Die verschiedenen Steckverbindungen können intern in der Kamera z.B. über einen Bus und/oder ein Netzwerk verbunden sein. Alternativ können die Kameramodule auch über dieselbe Datenschnittstelle die Geräteprofile übertragen.

Die Geräteprofile können beispielsweise in Form einer XML (Extensible Markup Language) Datei, einer JSON (JavaScript Object Notation) Datei oder ähnlichem übertragen werden.

Weiterhin kann das Format, in welchem die Geräteprofile übertragen werden, ebenfalls einheitlich sein.

Gemäß einer weiteren Ausführungsform umfasst die Datenschnittstelle ein Datennetzwerk, wobei das Datennetzwerk ein Ethernet-Netzwerk, ein Feldbus-Netzwerk oder ein Non-IP-Netzwerk (NIN) umfasst oder ein solches Netzwerk ist. Ethernet definiert beispielsweise kabelgebundene Datennetzwerke mit Übertragungsraten zwischen 1 Mbit und 4 Gbit. Bei einem Ethernet-Netzwerk sind sowohl die physische Schicht (OSI Layer 1) als auch die Data-Link-Schicht (OSI Layer 2) vorgegeben. Das Datennetzwerk kann zumindest abschnittsweise auch durch ein WLAN (Wireless Local Area Network) gebildet werden. In diesem Fall können ein oder mehrere Kameramodule und/oder die Verteileinheit einen WLAN-Transceiver umfassen, so dass Kameramodule auch mittels WLAN in das Datennetzwerk eingebunden werden können.

Ein Feldbus-Netzwerk kann beispielsweise eine Echtzeitfähigkeit bereitstellen. Das Feldbus-Netzwerk kann alternativ oder zusätzlich Ethernet-basiert sein. Bei dem Feldbus-Netzwerk kann es sich beispielsweise um EtherCAT, EIP, Sercos III und dergleichen handeln. Bei dem Non-IP-Netzwerk (NIN) kann es sich insbesondere um ein nicht-paketbasiertes sondern um ein Stream-basiertes Netzwerk handeln.

Das erste und/oder zweite Kameramodul kann also an das Datennetzwerk angeschlossen werden, wobei sich nach dem Anschließen die Kameramodule mit ihrem Geräteprofile bei der Kamera anmelden. Durch das Übertragen der Geräteprofile an die Kamera können das erste und zweite Kameramodul dann insbesondere automatisch zur Kamera hinzugefügt werden. Zusätzlich zum Anschluss mittels der Datenschnittstelle (z.B. des Datennetzwerks) können die Kameramodule zumindest zum Teil auch mechanisch an der Kamera befestigt werden.

Bevorzugt wird das gleiche Protokoll oder die gleichen Protokolle für das erste und zweite Kameramodul (bzw. für alle Kameramodule) zur Übertragung der Geräteprofile eingesetzt. Beispielsweise können als Protokolle TCP (Transmission Control Protocol) und/oder UDP (User Datagram Protocol) verwendet werden. Zudem kann RTP (Real-Time Transport Protocol) zum Einsatz kommen, insbesondere für echtzeitkritische Daten. Unterschiedliche Kameramodule können dasselbe Protokoll zur Datenübermittlung über das Datennetzwerk verwenden, wobei aber die physische Schicht (OSI Layer 1) und/oder die Data-Link-Schicht (OSI Layer 2) unterschiedlich sein können. So können für Verbindungen mit hohem Datendurchsatz Lichtwellenleiter (z.B. ab 10 Gbit/s), für andere Verbindungen Kupferkabel, eingesetzt werden.

Gemäß einer weiteren Ausführungsform ist die Kamera eine modulare und insbesondere verteilte elektronische Kamera, wobei die Kamera ein Bilderfassungsmodul, umfassend einen Bildsensor sowie eine mit dem Bildsensor gekoppelte Bildverarbeitungseinheit aufweist. Die Kamera umfasst insbesondere ein erstes Funktionsmodul, beispielsweise ein Bedienmodul zur Steuerung und/oder Konfiguration der Kamera. Die Kamera umfasst insbesondere ein zweites Funktionsmodul, beispielsweise ein Anzeigemodul zur Darstellung von vom Bildsensor erfassten Kamerabildern. Das Bilderfassungsmodul und die Funktionsmodule sind dabei Kameramodule. Die Kameramodule sind z.B. mittels eines Datennetzwerks miteinander verbunden. Das Datennetzwerk zur Verbindung des Bilderfassungsmoduls und der Funktionsmodule kann dasselbe Datennetzwerk sein, mit dem auch das erste und zweite Kameramodul das Gerätprofil übertragen. Das Datennetzwerk weist bevorzugt eine Verteileinheit auf, welche Daten über das Datennetzwerk von den Kameramodulen empfängt und Daten von einem der Kameramodule zu zumindest einem der anderen Kameramodule weiterleitet. Die in der Kamera enthaltenen Kameramodule, also das Bilderfassungsmodul, das Bedienmodul und/oder das Anzeigemodul können sich auch ursprünglich bei dem Steuermodul mit ihrem Geräteprofil gemeldet haben. Beim Einschalten der Kamera kann das Steuermodul jedes Mal die Geräteprofile sämtlicher über die Datenschnittstelle bzw. das Datennetzwerk angeschlossener Kameramodule abfragen und die Betriebsparameter entsprechend anpassen.

Die Bildverarbeitungseinheit überführt die Kamera bevorzugt in ein digitales Format, das über das Datennetzwerk verschickt werden kann. Die Kamerabilder können als Einzelbilder und/oder als Video vorliegen. Beispielsweise können die Kamerabilder als Stream über das Datennetzwerk übertragen werden.

Ein Funktionsmodul dient insbesondere dazu, jeweils einen Teil der Funktionen der Kamera zur Verfügung zu stellen. Ein Funktionsmodul kann eines der hierin genannten Kameramodule sein.

Das Bedienmodul kann ein Human-Machine-Interface (HMI) aufweisen, beispielsweise in der Form eines Touchscreens oder einer Anordnung von Schaltern und/oder eines Displays. Das Bedienmodul kann beispielsweise dazu dienen, die Aufnahme von Kamerabildern zu starten und/oder zu stoppen, eine Framerate bei der Aufnahme von Kamerabildern, eine Farbtiefe und dergleichen einzustellen.

Die Verteileinheit umfasst bevorzugt einen Netzwerk-Switch, einen Hub, einen Router und/oder ein Gateway. Die Verteileinheit kann auch eine der genannten Netzwerk-Komponenten sein. Bevorzugt weist die Verteileinheit Netzwerk-Ports auf, an die jeweils ein Kameramodul angeschlossen werden kann. Die Ports können unterschiedliche Übertragungsgeschwindigkeiten unterstützen, beispielsweise 10 Mbit, 100 Mbit, 1 Gbit, 10 Gbit, 100 Gbit oder 400 Gbit.

Ist die Verteileinheit ein Hub, werden alle von den Kameramodulen bei der Verteileinheit eingehenden Daten an alle anderen Kameramodule weitergeleitet. Bei einem Switch, Router und/oder Gateway können die eingehenden Daten zielgerichtet an bestimmte Kameramodule weitergeleitet werden. Hierzu enthält die Verteileinheit dann Informationen, welches Kameramodul an welchem Netzwerk-Port angeschlossen ist. Durch die Verwendung beispielsweise eines Switches besteht somit der Vorteil, dass nur für ein jeweiliges Kameramodul bestimmte Daten an dieses Kameramodul von der Verteileinheit weitergeleitet werden. Die vorhandene Übertragungsbandbreite des Datennetzwerks wird folglich nicht unnötig ausgeschöpft.

Gemäß einer weiteren Ausführungsform ist die Verteileinheit kaskadiert und/oder aus Teileinheiten aufgebaut. Die Verteileinheit kann also zum Beispiel "gestacked" sein oder Untereinheiten ("kaskadiert") aufweisen. Es ist lediglich relevant, dass die Komponenten der Verteileinheit miteinander kommunizieren können, so dass eine Kommunikation der Kameramodule untereinander über das Datennetzwerk möglich ist. Alternativ besteht die Möglichkeit, dass die Verteileinheit nur genau eine Komponente aufweist, beispielsweise nur einen Switch.

Bei verteilten und/oder kaskadierten Verteileinheiten ist es auch möglich, dass zumindest ein Teil der Kameramodule jeweils einen Teil der Verteileinheit umfasst. Beispielsweise kann ein Teil der Kameramodule jeweils einen eigenen Switch aufweisen, so dass mehrere solcher Kameramodule in einer Kette mittels Netzwerkkabeln verbunden werden können. Dabei kann jedes Kameramodul beispielsweise zumindest zwei Netzwerkbuchsen aufweisen.

Gemäß einer weiteren Ausführungsform ist oder umfasst das erste und/oder zweite Kameramodul eines der Folgenden:
- Bilderfassungsmodul,
- Speichermodul,
- Wiedergabemodul,
- Anzeigemodul,
- Audiomodul,
- Objektiv,
- Distanzmessungsmodul,
- Batteriemodul,
- Positionserfassungsmodul,
- (Funk-)Kommunikationsmodul,
- Fernsteuermodul.

Bei dem Bilderfassungsmodul kann ein Bildsensor mit zugehöriger Elektronik gekoppelt sein, wobei die zugehörige Elektronik beispielsweise als Bildverarbeitungseinheit bezeichnet wird. Die Bildverarbeitungseinheit kann z.B. eine Spannungsversorgung, eine Temperaturstabilisierung und/oder Kühlung des Bildsensors bewirken. Die Bildverarbeitungseinheit kann weiterhin ausgebildet sein, die vom Bildsensor erfassten Kamerabilder auszulesen und beim Auslesen auf ein vorgegebenes Timing und/oder eine Triggerung zu achten.

Das Anzeigemodul umfasst bevorzugt einen Bildschirm, auf dem zum Beispiel die momentan von dem Bilderfassungsmodul erfassten Kamerabilder angezeigt werden können. Bei dem Anzeigemodul kann es sich beispielsweise um einen Sucher (Electronic View Finder - EVF) oder allgemein um einen Monitor handeln.

Bei dem Speichermodul kann es sich um einen Recorder im Datennetzwerk handeln, der die Kamerabilder speichert.

Das Wiedergabemodul kann gespeicherte Kamerabilder wiedergeben, beispielsweise auf einem Display. Alternativ kann das Wiedergabemodul die gespeicherten Kamerabilder als Stream in das Netzwerk ausspielen, so dass die gespeicherten Kamerabilder beispielsweise auf einem Anzeigemodul ausgegeben werden können.

Das Batteriemodul kann z.B. im Geräteprofil seine maximale Kapazität, seinen maximalen Ausgangsstrom und/oder seine Ausgangsspannung der Kamera mitteilen. Auf diese Weise kann die Kamera beispielsweise die maximale zur Verfügung stehende Leistung ermitteln und so eine Überlastung des Batteriemoduls vermeiden.

Das Positionserfassungsmodul kann seine Position im Raum erfassen (und damit die der Kamera oder anderer Kameramodule). Das (Funk)-Kommunikationsmodul kann allgemein zur (Funk)-Kommunikation mit weiteren Modulen ausgebildet sein. Das Fernsteuermodul kann eine Fernsteuerung zumindest eines oder mehrerer Kameramodule ermöglichen.

Gemäß einer weiteren Ausführungsform umfasst das erste und/oder zwei Kameramodul ein Universalbedienmodul, wobei das Universalbedienmodul für die Bedienung verschiedener Kamerafunktionen konfigurierbar ist. Bevorzugt umfasst das Universalbedienmodul ein Smartphone und/oder Tablet. Das Universalbedienmodul kann beispielsweise durch einen Benutzer eingestellt bzw. konfiguriert werden, um z.B. verschiedene andere Kameramodule und damit Kamerafunktionen zu steuern. Das von dem Universalbedienmodul an die Kamera übertragene Geräteprofil kann entsprechend, insbesondere automatisch, an die jeweilige Konfiguration des Universalbedienmoduls angepasst sein. So kann das Universalbedienmodul z.B. für die Steuerung eines Objektivmotors konfiguriert werden, woraufhin das Geräteprofil des Universalbedienmoduls der Kamera mitteilt, dass die Steuerung eines Objektivmotors möglich ist. Sofern das Universalbedienmodul aber z.B. für die Steuerung eines Wiedergabemoduls konfiguriert ist, teilt das Geräteprofil des Universalbedienmoduls der Kamera mit, dass die Steuerung eines Wiedergabemoduls möglich ist.

Bei dem Universalbedienmodul kann es sich z.B. um ein Smartphone handeln. So kann z.B. dann in einem Menü auf dem Bildschirm des Universalbedienmoduls ausgewählt werden, welche Kamerafunktion bzw. welches Kameramodul von dem Universalbedienmodul gesteuert werden soll. Daraufhin erfolgt dann die oben genannte Anpassung des Geräteprofils des Universalbedienmoduls. Alternativ oder zusätzlich ist es auch möglich, das Geräteprofil direkt in das Universalbedienmodul einzugeben und/oder am Universalbedienmodul zu verändern.

Das Universalbedienmodul kann z.B. per WLAN mit der Kamera verbunden werden, sodass eine einfache und ortsunabhängige Steuerung von Kamerafunktionen möglich wird. Es versteht sich, dass auch für das Universalbedienmodul die unten erläuterte Rechteverwaltung gelten kann, sodass ein unbefugter Zugriff auf Kamerafunktionen unterbunden werden kann.

Insbesondere können z.B. mehrere Anzeigemodule an das Datennetzwerk angeschlossen und damit in die Kamera eingebunden sein. Die Anzeigemodule können über das Datennetzwerk z.B. dieselben Bilddaten empfangen. Die Anzeigemodule können eine Bildverarbeitungseinheit aufweisen, die eine Veränderung der Bilddaten vornimmt, bevor die Bilddaten angezeigt werden. Durch die Veränderung kann z.B. auf einem Anzeigemodul eine Falschfarbendarstellung, auf einem anderen Anzeigemodul hingegen eine Farbveränderung vorgenommen werden. Durch die Bildverarbeitungseinheiten in den Anzeigemodulen muss die Kamera oder genauer gesagt das Bilderfassungsmodul vorteilhafterweise nicht verschiedene Bilddaten zur Verfügung stellen. Die Rechenanforderungen an das Bilderfassungsmodul oder ein Prozessormodul können somit sinken, wodurch die Kamera energiesparender, kleiner und/oder kompakter ausgebildet werden kann.

Das Audiomodul kann zur Ein- und/oder Ausgabe von Tonsignalen dienen. Die Hauptanwendung des Audiomoduls kann in der Erfassung und Verarbeitung von Audiosignalen für die Tonaufnahme liegen. Das Audiomodul kann aber auch Teil eines Intercom-Systems sein, mit welchem Sprachnachrichten zwischen verschiedenen Personen (z.B. Kamera-Bedienern) übertragen werden.

Neben dem Objektiv kann das erste und/oder zweite Kameramodul auch ein Objektivaufnahmemodul sein oder ein solches umfassen. Das Objektivaufnahmemodul kann beispielsweise die Ansteuerung eines Fokusmotors und/oder eines Blendenmotors gestatten.

Das Distanzmessungsmodul kann bevorzugt ausgebildet sein, Abstände zwischen dem Bilderfassungsmodul und aufzunehmenden Objekten zu bestimmen.

Die Geräteklasse in dem Geräteprofil eines entsprechenden Kameramoduls kann dementsprechend beispielsweise "Bilderfassungsmodul", "Speichermodul", "Anzeigemodul", usw. sein. Die Geräteklasse kann zudem eine oder mehrere Sub-klassen umfassen, z.B. in der Geräteklasse Objektiv kann als Subklasse "Prime"- oder "Zoom"-Objektiv angegeben sein.

Gemäß einer weiteren Ausführungsform umfassen die Informationen zum Funktionsumfang des Bilderfassungsmoduls
- einen Frameratenfunktionsumfang des Bilderfassungsmoduls,
- einen Frameratenbereich (FPS-Bereich),
- eine Frameratengranularität (FPS-Granularität),
- einen Empfindlichkeitsbereich (beispielsweise in ASA oder ISO),
- mögliche Bildformate und/oder
- mögliche Auflösungen.

Alternativ oder zusätzlich können die Informationen zum Funktionsumfang des Audiomoduls die vorhandenen Audioeingänge und/oder die vorhandenen Audioausgänge und/oder unterstützte Codecs umfassen.

In entsprechender Weise können andere Kameramodule jeweils für das Kameramodul charakteristische Eigenschaften in den Informationen zum Funktionsumfang angeben. In den Informationen zum Funktionsumfang kann zudem eine eindeutige Identifikation enthalten sein, mit welcher sich ein Kameramodul eindeutig identifizieren lässt.

Gemäß einer weiteren Ausführungsform weist das Geräteprofil zumindest eines Kameramoduls mehrere Geräteklassen auf, wobei zu jeder Geräteklasse Informationen zum Funktionsumfang des Kameramoduls erfasst sind. Dabei werden die mehreren Geräteklassen und die Informationen zum Funktionsumfang an die Kamera übertragen. Die Kamera berücksichtigt dann beide Geräteklassen und sämtliche Informationen zum Funktionsumfang der beiden Geräteklassen bei der Anpassung der Betriebsparameter. Bei einem solchen Kameramodul, welches mehreren Geräteklassen zugeordnet sein kann, kann auch von einem Verbundmodul gesprochen werden. Für ein Verbundmodul kann die Übertragung des Geräteprofils und die Anpassung der Betriebsparameter jeweils separat, wie vorstehend beschrieben, durchgeführt werden.

Gemäß einer weiteren Ausführungsform wird das Geräteprofil zumindest eines Kameramoduls automatisch an die Kamera übertragen wird und/oder nimmt die Kamera die Anpassung ihrer Betriebsparameter automatisch vor. Sowohl das Übertragen der Geräteprofile als auch die Anpassung der Betriebsparameter können somit ohne Zutun des Benutzers erfolgen. Für das Anschließen von Kameramodulen kann sich somit eine "Plug'n'Play"-Funktionalität ergeben.

Gemäß einer weiteren Ausführungsform passt die Kamera die Betriebsparameter derart an, dass ein Stromverbrauch der Kamera bei Bereitstellung der von den Kameramodulen benötigten Ressourcen minimiert wird. Unter den benötigten Ressourcen ist zu verstehen, dass die von den Kameramodulen z.B. benötigten Frameraten, Farbtiefen und/oder Datenpfade bereitgestellt werden. Zur Optimierung des Stromverbrauchs der Kamera kann die Kamera aus den Geräteprofilen beispielsweise jeweils die Mindestanforderungen (über sämtliche Kameramodule gesehen) ermitteln, wobei die Mindestanforderungen dann in den Betriebsparametern abgebildet werden. Insbesondere kann z.B. die Kamera mit einer Framerate oder einer Auflösung betrieben werden, die der Mindestanforderung über alle Kameramodule gesehen entspricht. Eine unnötig hohe Framerate oder Auflösung und damit einhergehend ein erhöhter Stromverbrauch werden damit vermieden.

Insbesondere können so durch z.B. spezielle Low-Power-Profile der Geräteprofile z.B. dynamisch bestimmte Verarbeitungsschritte in der Kamera gesperrt werden, die dann von Geräten außerhalb der Kamera übernommen werden können. Ein solches Low-Power-Profil kann insbesondere an zumindest einem der Kameramodule aktiviert werden. Hierdurch ist es für den Anwender möglich, batteriebetriebene Kameras (z.B. Handkameras) möglichst stromsparend zu betreiben, ohne manuell alle Abhängigkeiten zwischen den Kameramodulen auflösen zu müssen.

Gemäß einer weiteren Ausführungsform umfasst zumindest ein Geräteprofil Abhängigkeiten von anderen Geräteprofilen. Das Geräteprofil kann also Abhängigkeiten beschreiben. Beispielsweise kann ein Fokusmodul als Abhängigkeit eine bestimmte Klasse von Objektiven nennen, wenn das Fokusmodul und/oder dessen Fokusmotor nur z.B. für diejenige Klasse von Objektiven ausgelegt ist.

Gemäß einer weiteren Ausführungsform wird bei fehlenden und/oder fehlerhaften und/oder unbekannten Geräteklassen und/oder Informationen zum Funktionsumfang eines Kameramoduls ein Warnsignal ausgegeben. Das Warnsignal kann beispielsweise ein Hinweis an den Bediener der Kamera sein, welcher über ein Display oder per Ton ausgegeben wird. Trotz des Warnsignals kann das Kameramodul trotzdem in den Betrieb der Kamera eingebunden werden. Fehlende, falsche und/oder unbekannte Informationen können z.B. ignoriert oder durch einen Standardwert versetzt werden. Informationen, die also unbekannt sind oder nicht verarbeitet werden können, können dementsprechend so behandelt werden, dass keinerlei funktionale Probleme beim Betrieb der Kamera auftreten.

Gemäß einer weiteren Ausführungsform umfasst zumindest eines der Geräteprofile Authentisierungsinformationen, welche bevorzugt eine Verifizierung des tatsächlich angeschlossenen Kameramoduls ermöglichen. Bei den Authentisierungsinformationen kann es sich z.B. um einen Lizenzschlüssel handeln. Der Lizenzschlüssel kann beispielsweise mit einem Algorithmus oder gegen eine Datenbank geprüft werden. Alternativ oder zusätzlich ist z.B. eine digitale Signatur in den Authentisierungsinformationen umfasst. Die Kamera kann dann beispielsweise öffentliche Schlüssel von zugelassenen Herstellern für Kameramodule speichern und die digitale Signatur anhand der öffentlichen Schlüssel prüfen.

Bevorzugt werden lediglich Kameramodule in den Betrieb der Kamera eingebunden, deren Authentisierungsinformationen valide sind und/oder von der Kamera akzeptiert werden. Durch die Authentisierungsinformationen kann vermieden werden, dass ungewollte Kameramodule in den Betrieb der Kamera eingebunden werden und beispielsweise Fehlfunktionen verursachen.

Gemäß einer weiteren Ausführungsform wird für die Kamera ein Systemprofil aktiviert, wobei das Systemprofil, insbesondere nur, einen Teil der Betriebsparameter setzt, wobei das Systemprofil bei der Anpassung der Betriebsparameter an die Geräteprofile berücksichtigt wird. Die Kamera kann auch mehrere verschiedene Systemprofile umfassen, von welchen zu einem Zeitpunkt jeweils genau eines aktiviert werden kann. Anhand der Systemprofile können unterschiedliche Grundeinstellungen der Betriebsparameter und/oder eines Bedienmoduls vorgenommen werden, wobei durch die Grundeinstellungen unterschiedliche Funktionsumfänge freigegeben werden können. Beispielsweise kann eine Grundeinstellung für einen Stand-Alone-Betrieb bei Kinoproduktionen, eine andere Grundeinstellung für den Betrieb als Schulterkamera und eine weitere Grundeinstellung für den Einsatz im Mehrkamera-Verbund ausgelegt sein. Bei einem Stand-Alone-Betrieb können die Betriebsparameter beispielsweise so gewählt werden, dass Einstellungen, welche direkt an der Kamera vorgenommen werden, priorisiert sind. Im Mehrkamerabetrieb hingegen können die Betriebsparameter so gewählt sein, dass z.B. Einstellungen über eine Fernsteuerung priorisiert sind.

Durch die Systemprofile können dem Bediener vordefinierte Anwendungsszenarien bereitgestellt werden, die etablierte Arbeitsabläufe am Filmset abbilden und so eine aufwendige initiale Konfiguration für den Anwender vermeiden. Die Kamera ist folglich schneller und flexibler einsetzbar.

Gemäß einer weiteren Ausführungsform wird für die Kamera ein Benutzerprofil aktiviert, wobei das Benutzerprofil, insbesondere nur, einen Teil der Betriebsparameter der Kamera setzt, wobei das Benutzerprofil bei der Anpassung der Betriebsparameter an die Geräteprofile berücksichtigt wird. Im Gegensatz zu den Systemprofilen, erlauben Benutzerprofile bevorzugt die freie Konfiguration der Betriebsparameter durch den Benutzer. Diese freie Konfiguration der Betriebsparameter kann dann als Benutzerprofil abgespeichert werden. Auf diese Weise können für den jeweiligen Anwendungsfall am Set vom Benutzer passende Profile erstellt werden.

Die Betriebsparameter können eine Rechteverwaltung umfassen, die einen Zugriff auf vorbestimmte Funktionen der Kamera nur mit den entsprechenden Rechten gestatten. So können durch die Benutzerprofile beispielsweise Profile mit entsprechender Rechteverwaltung erstellt werden, wobei z.B. das Umschalten zwischen Aufnahme und Wiedergabe nur für bestimmte Kameramodule erlaubt wird, wohingegen anderen Kameramodulen z.B. nur die Möglichkeit zur Farbraumanpassung eingeräumt wird.

Erfindungsgemäß umfassen die Betriebsparameter ein Rechtemanagement, welches definiert, welcher Benutzer und/oder welches Kameramodul welche anderen Kameramodule und in welchem Umfang steuern und/oder konfigurieren darf. In Abhängigkeit vom Rechtemanagement kann es somit z.B. vorgesehen sein, dass bestimmte Kameramodule nur niedrige Auflösungen und/oder Bilddaten mit digitalem Wasserzeichen angezeigt bekommen. Alternativ oder zusätzlich können vorbestimmte Einstellmöglichkeiten an Kameramodulen durch das Rechtemanagement für bestimmte Kameramodule gesperrt werden. Ein solches Rechtemanagement ist beispielsweise bei Cloud-basierten Workflows mit Bildübertragung an entfernte Kameramodule, welche als Betrachtungsstationen dienen, sinnvoll.

Die Verwaltung der Benutzerprofile kann entweder über die Kamera selbst oder aber auch durch externe Applikationen, beispielsweise Apps oder Cloud-Services, erfolgen. Die Benutzerprofile können zudem, insbesondere mittels des Datennetzwerks, von einer Kamera zu einer anderen übertragen werden, so dass dort eine aufwendige Einstellprozedur entfallen kann.

Zudem ist es möglich, dass Einstellungen in den Benutzerprofilen an vorgegebene Geräteklassen gebunden sind. Dies bedeutet, dass diese Einstellungen nur dann aktiviert werden, wenn in der Kamera ein Kameramodul aus der vorbestimmten Geräteklasse eingebunden ist.

Gemäß einer weiteren Ausführungsform erfolgt bei Anschluss mehrerer Kameramodule der gleichen Geräteklasse eine Priorisierung der Kameramodule der gleichen Geräteklasse basierend auf den Geräteprofilen und/oder dem gerade aktivierten Systemprofil und/oder dem gerade aktiven Benutzerprofil. Sind also mehrere gleichartige Kameramodule in einer Kamera eingebunden, so können die Betriebsparameter basierend z.B. auf dem Systemprofil und/oder den Benutzerprofilen unterschiedlich gesetzt werden. Selbiges kann für Kameramodule gelten, die gleichartige Einstellungen zulassen. Dementsprechend kann bei Anschluss mehrerer Kameramodule, die gleichartige Einstellungen zulassen, eine Priorisierung der Kameramodule basierend auf den Geräteprofilen und/oder dem gerade aktiven Systemprofil und/oder dem gerade aktiven Benutzerprofil erfolgen. Gestatten beispielsweise zwei Kameramodule die Einstellung des Fokus, so kann bei einem aktuell gewählten Systemprofil für einen Mehrkamera-Betrieb (Multi-Cam) eine Hinterkamera-Fokusbedienung höhere Priorität als eine Funkschärfesteuerung erhalten. Ist als Systemprofil ein Remote-Betrieb aktiviert, könnte die Priorisierung umgekehrt sein.

Ebenfalls ist es möglich, dass die Kamera beim Anschließen von mehreren Kameramodulen der gleichen Geräteklasse, z.B. beim Anschließen von zwei Objektivmotoren, diesen Kameramodulen verschiedene Rollen und damit verschiedene Funktionen zuweist. Für diese Zuweisung kann eine bidirektionale Kommunikation mit den Kameramodulen erfolgen. So kann einer der beiden Objektivmotoren dann mit der Rolle des Fokusmotors, ein anderer hingegen mit der Rolle des Blendenmotors betraut werden.

Weiterer Gegenstand der Erfindung ist ein Kamerasystem gemäß Anspruch 14.

Weiterhin betrifft die Erfindung ein Kameramodul mit einer Datenschnittstelle, wobei das Kameramodul ausgebildet ist, ein Geräteprofil über die Datenschnittstelle an die Kamera zu übertragen, wobei das Geräteprofil eine Geräteklasse des Kameramoduls sowie Informationen zum Funktionsumfang des Kameramoduls umfasst.

Schließlich betrifft die Erfindung auch eine Kamera mit einer Datenschnittstelle, wobei die Kamera ausgebildet ist, ein Geräteprofil über die Datenschnittstelle von einem Kameramodul zu empfangen, wobei das Geräteprofil eine Geräteklasse des Kameramoduls sowie Informationen zum Funktionsumfang des Kameramoduls umfasst, wobei die Kamera ausgebildet ist, ihre Betriebsparameter anhand des Geräteprofils an das angeschlossene Kameramodul anzupassen.

Für das erfindungsgemäße Kamerasystem, das erfindungsgemäße Kameramodul und die erfindungsgemäße Kamera gelten die Ausführungen zum erfindungsgemäßen Verfahren entsprechend. Dies gilt insbesondere hinsichtlich Vorteilen und Ausführungsformen. Es versteht sich, dass sämtlich hierin genannten Ausführungsformen miteinander kombinierbar sind, sofern nicht explizit etwas Gegenteiliges angegeben ist.

Nachfolgend wird die Erfindung rein beispielhaft unter Bezugnahme auf die Zeichnungen beschrieben. Dabei wird zunächst allgemein die modulare Kamera beschrieben. Anschließend wird auf die Geräteprofile und auf die Möglichkeit des Monitorings auf verschiedenen Anzeigemodulen eingegangen.

Es zeigen:
- Fig. 1: schematisch eine modulare elektronische Kamera mit einer Verteileinheit;
- Fig. 2: schematisch die räumliche Anordnung der Kameramodule der elektronischen Kamera von Fig. 1;
- Fig. 3: eine schematische Ansicht von an ein Datennetzwerk angeschlossenen Kameramodulen gemäß einer ersten Ausführungsform;
- Fig. 4: schematisch eine Ansicht von an ein Datennetzwerk angeschlossenen Kameramodulen gemäß einer zweiten Ausführungsform;
- Fig. 5: die Kopplung zweier Kameras über ein Datennetzwerk;
- Fig. 6: schematisch die Aufteilung von Geräteprofilen in Geräteklasse und Informationen zum Funktionsumfang; und
- Fig. 7: schematisch über ein Datennetzwerk gekoppelte Anzeigemodule, welche Bilddaten von einem Sendemodul erhalten.

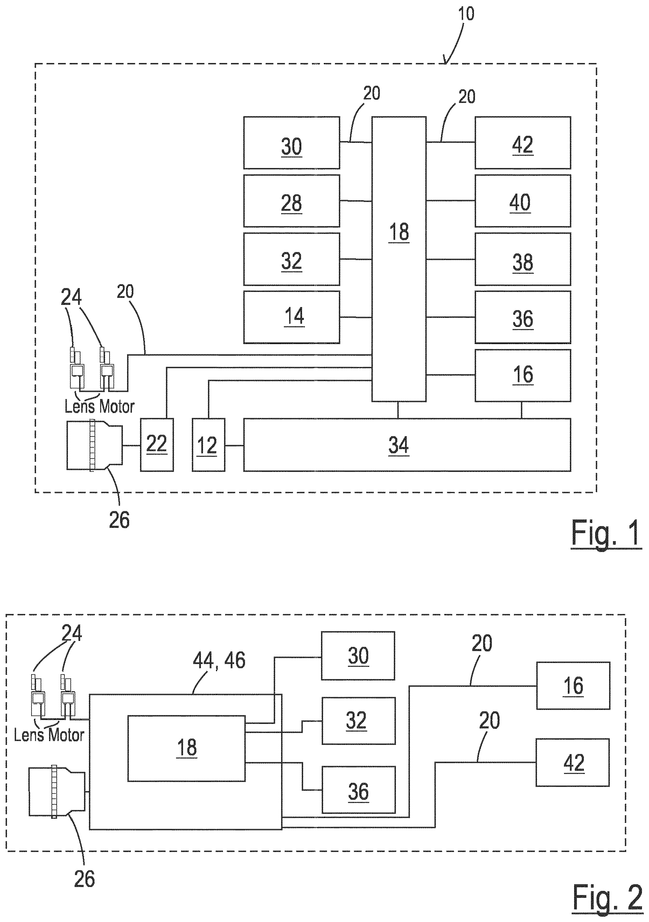

Fig. 1 zeigt eine Kamera 10 mit einem Bilderfassungsmodul 12, welches einen Bildsensor und eine Bildverarbeitungseinheit aufweist. Die Kamera 10 umfasst ferner ein Bedienmodul 14, welches zur Steuerung und/oder Konfiguration der Kamera 10 dient.

Die Kamera 10 umfasst weiterhin ein Anzeigemodul 16, z.B. einen Sucher, welches vom Bildsensor erfasste Kamerabilder darstellt.

Das Bilderfassungsmodul 12, das Bedienmodul 14 und das Anzeigemodul 16 sind Kameramodule und sind jeweils mit einer als Switch 18 ausgebildeten Verteileinheit über Ethernet-Verbindungen 20 gekoppelt. Das Bedienmodul 14 und das Anzeigemodul 16 können auch als erstes und zweites Funktionsmodul bezeichnet werden.

Die Kamera 10 umfasst noch weitere Kameramodule, nämlich ein Objektivaufnahmemodul 22, wobei das Objektivaufnahmemodul 22 in mehrere Teilmodule gegliedert ist und Motoren 24 zur Verstellung eines Objektivs 26 und eine Motorsteuerung 28 zur Steuerung der Motoren 24 aufweist. Die Motoren 24, das Objektiv 26 und die Motorsteuerung 28 könnten alternativ auch als separate Kameramodule angesehen werden.

Weitere Kameramodule der Kamera 10 sind ein Kamera-Positionierungsmodul 30, ein Audiomodul 32, ein Prozessormodul 34, ein Konvertierungsmodul 36, ein Funkmodul 38 und ein Anschlussmodul 40. Schließlich kann die Kamera 10 noch ein zweites Anzeigemodul 42 aufweisen.

Sämtliche der Kameramodule 12, 14, 16, 22, 30, 32, 34, 36, 38, 40, 42 sind über Ethernet-Verbindungen 20 mit dem Switch 18 gekoppelt. Die Ethernet-Verbindungen 20 können als Kupferkabel oder auch als Lichtwellenleiter ausgebildet sein.

Der Switch 18 empfängt von den Kameramodulen jeweils Daten und leitet die Daten zu einem oder mehreren anderen Kameramodulen weiter. Die Kameramodule verwenden dabei das gleiche Datennetzwerk, nämlich ein aus dem Switch 18 und den Ethernet-Verbindungen 20 aufgebautes Datennetzwerk, welches Daten zwischen den Kameramodulen überträgt. Das Datennetzwerk dient als Datenschnittstelle zwischen den Kameramodulen. Durch einfaches Anschließen an das Datennetzwerk können somit andere und/oder zusätzliche Kameramodule in die Kamera 10 integriert werden.

Fig. 2 zeigt die räumliche Anordnung der Kameramodule der Kamera 10 von Fig. 1. Wie in Fig. 2 gezeigt, umfasst die Kamera 10 eine Zentraleinheit 44, die ein eigenes Gehäuse 46 aufweist. In der Zentraleinheit 44 sind der Switch 18 und sämtliche nicht außerhalb der Zentraleinheit 44 gezeigten Kameramodule angeordnet. Außerhalb des Gehäuses 46 der Zentraleinheit 44 ist das Kamerapositionierungsmodul 30, das Audiomodul 32 und das Konvertierungsmodul 36 angeordnet. Diese Module können mechanisch an dem Gehäuse 46 der Zentraleinheit 44 angebracht sein. Demgegenüber sind das Anzeigemodul 16 und das zweite Anzeigemodul 42 beabstandet und außerhalb des Gehäuses 46 angebracht und insbesondere nur über die Ethernet-Verbindungen 20 mit der Zentraleinheit 44 und damit mit dem Switch 18 verbunden. Durch die Auslagerung von Kameramodulen kann der üblicherweise zu bewegende Teil der Kamera 10 kleiner und handlicher gestaltet werden.

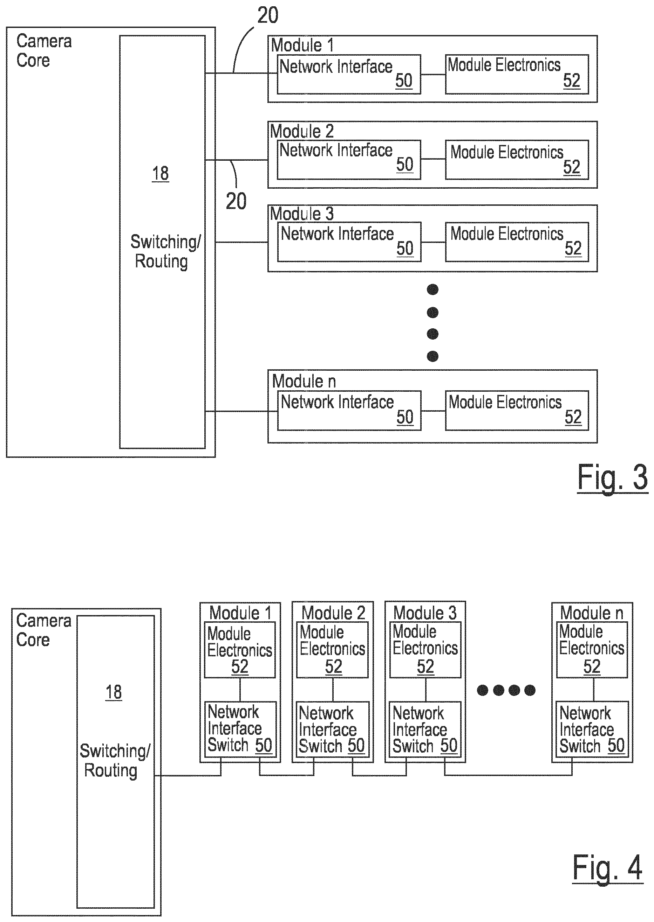

Fig. 3 und Fig. 4 zeigen zwei unterschiedliche Ausführungsformen der Ausbildung des Datennetzwerks. Insbesondere ab Fig. 3 und Fig. 4 werden Kameramodule allgemein mit dem Bezugszeichen 48 dargestellt. Gemäß der ersten Ausführungsform von Fig. 3 verfügen die Kameramodule 48 jeweils über eine eigene Netzwerkschnittstelle 50, d.h. über eigene Hardware zum Anschluss einer Ethernet-Verbindung 20. Die Kameramodule 48 umfassen zudem jeweils eine Modulelektronik 52, die die Kommunikation über die Ethernet-Verbindung 20 steuert und z.B. einen Protokoll-Stack umfasst. Gemäß der Ausführungsform von Fig. 3 sind die Kameramodule 48 jeweils direkt über eine Ethernet-Verbindung 20 mit dem Switch 18 verbunden. Demgegenüber umfassen die Kameramodule 48 gemäß der zweiten Ausführungsform von Fig. 4 in ihrer Netzwerkschnittstelle 50 jeweils die Funktionalität eines Hubs oder Switches und können dementsprechend, wie in Fig. 4 gezeigt, in Form einer Kette verbunden werden. Bei der Ausführungsform von Fig. 4 ist nur ein Kameramodul 48 direkt über eine Ethernet-Verbindung 20 mit dem Switch 18 verbunden. Dieses direkt verbundene Kameramodul 48 umfasst eine weitere Ethernet-Verbindung 20, die das nächste Kameramodul 48 anschließt. Die Daten der nächsten Kameramodule 48 laufen somit zunächst über das direkt mit dem Switch 18 verbundene Kameramodul 48 und werden dann, sofern notwendig, an den Switch 18 weitergeleitet.

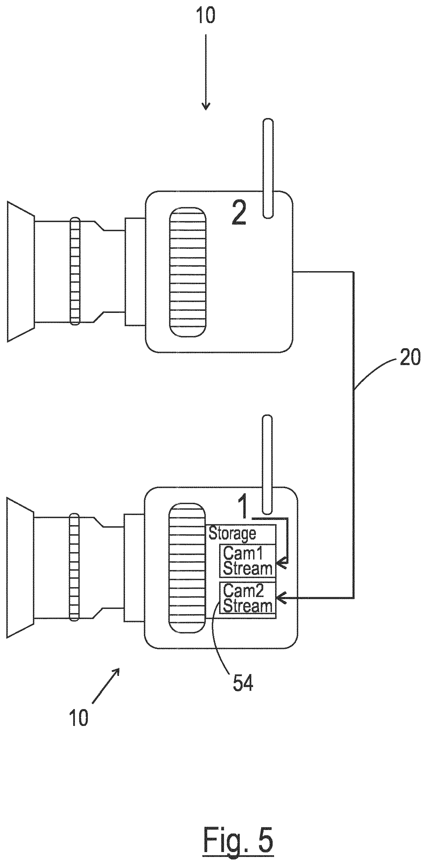

Fig. 5 zeigt die Verbindung zweier Kameras 10 über eine Ethernet-Verbindung 20. Durch die Ethernet-Verbindung 20 zwischen den beiden Kameras 10 können die Datennetzwerke der Kameras 10 zusammengeschlossen werden, so dass die Kameramodule 48 der einen Kamera 10 auf die Kameramodule 48 der anderen Kamera 10 zugreifen können. Beispielsweise kann die in Fig. 5 unten gezeigte Kamera 10 ein Speichermodul 54 aufweisen, das von beiden Kameras 10 zur Speicherung der erzeugten Bilddaten genutzt wird.

Es ist ersichtlich, dass durch die modulare Gestaltung der Kamera 10 mittels der Kameramodule 48 eine große Flexibilität im Aufbau der Kamera 10 erreicht werden kann. Zudem kann die Kamera 10 für den Betrieb klein und leicht gehalten werden, so dass sich am Filmset Vorteile ergeben. Das Datennetzwerk kann zudem auf einfache Weise mit weiteren Kameras gekoppelt werden, um eine Auslagerung von Funktionalitäten von einer auf eine andere Kamera 10 zu ermöglichen, eine Synchronisation von Kameras 10 für 3D-Aufnahmen zu gestatten oder die Steuerung mehrerer Kameras 10 von einem zentralen Punkt aus zu ermöglichen.

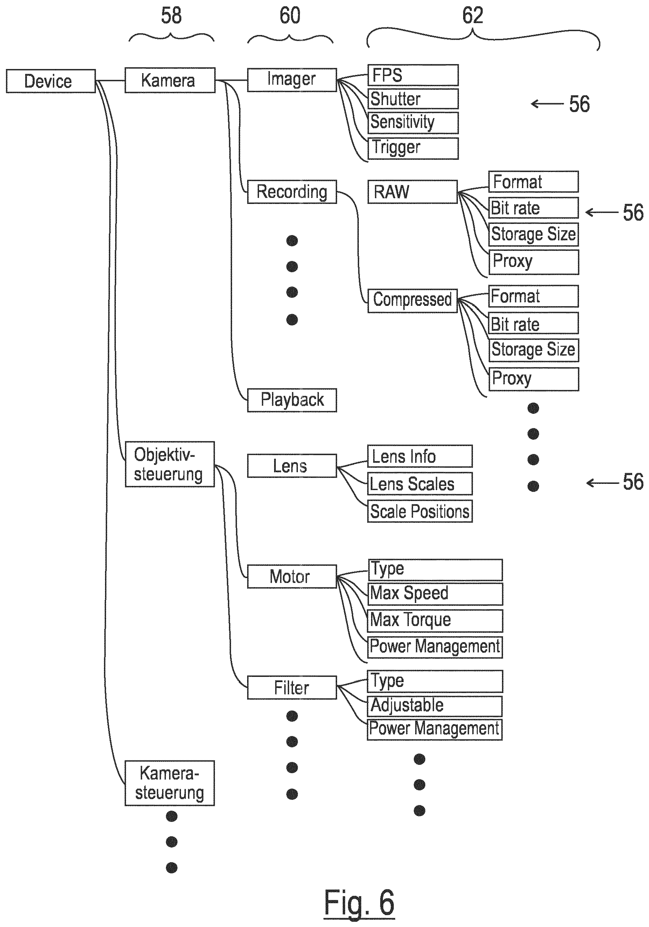

In Fig. 6 sind Geräteprofile von Kameramodulen 48 schematisch dargestellt. Die Geräteprofile 56 umfassen jeweils eine Geräteklasse 58, also beispielsweise "Kamera", "Objektivsteuerung" oder "Kamerasteuerung". Die Geräteklassen 58 umfassen jeweils noch Sub-Klassen 60, die die Geräteklasse genauer definieren. Zu jeder Geräteklasse 58 und/oder zu jeder Sub-Klasse 60 sind Informationen zum Funktionsumfang 62 angegeben, die beispielsweise die Fähigkeiten einer Kamera wiedergeben, z.B. ob die Kamera ein RAW-Format oder ein komprimiertes Format beherrscht.

Wird nun beispielhaft für die in Fig. 2 gezeigte Kamera 10 davon ausgegangen, dass das Kamera-Positionierungsmodul 30 und das Audiomodul 32 an die Kamera 10 angeschlossen werden, so wird für das Kamera-Positionierungsmodul 30 und das Audiomodul 32 zunächst mittels der Ethernet-Verbindung 20 eine Verbindung mit dem Datennetzwerk bzw. der Datenschnittstelle der Kamera 10 hergestellt. Eine (nicht gezeigte) Steuereinheit der Kamera 10, die beispielsweise in der Zentraleinheit 44 angeordnet ist oder die Bestandteil des Prozessormoduls 34 sein kann, bewirkt nach der Herstellung der Verbindung die Übertragung der Geräteprofile 56 vom Kamera-Positionierungsmodul 30 und vom Audiomodul 32 an die Kamera 10. Die Übertragung der Geräteprofile kann beispielsweise in Form einer XML- und/oder JSON-Datei erfolgen.

Nach dem Empfang der Geräteprofile 56 werden die Geräteprofile ausgewertet und Betriebsparameter der Kamera 10 basierend auf den Geräteprofilen 56 angepasst. So kann beispielsweise eine Übermittlung von Audiosignalen zum Audiomodul 32 aktiviert werden. Überdies können beispielsweise die von dem Kamera-Positionierungsmodul 30 ausgegebenen Positionsinformationen an das Prozessormodul 34 weitergeleitet werden. Um solche Datenverbindungen einzurichten, werden die Betriebsparameter der Kamera 10 entsprechend geändert.

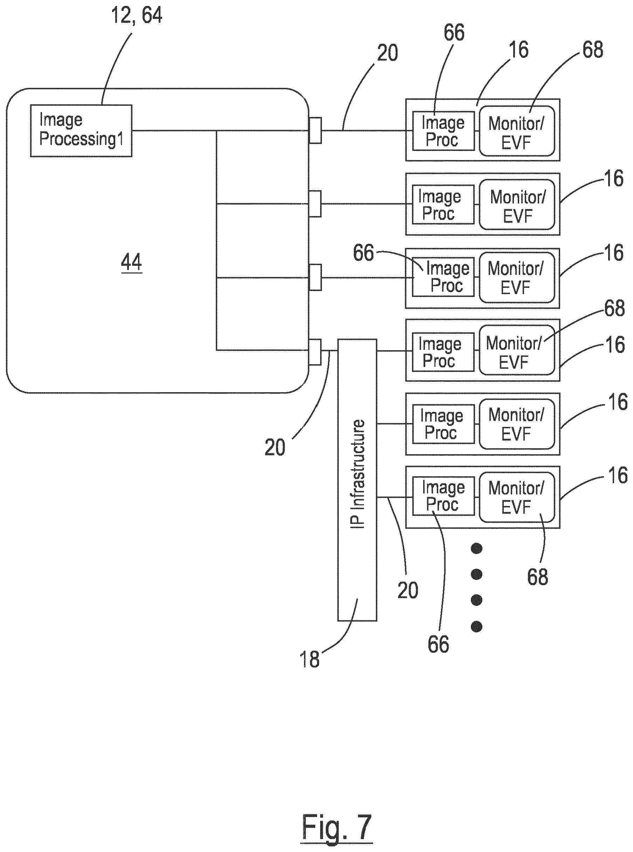

Schließlich wird in Fig. 7 noch die Anzeige unterschiedlicher Varianten von Kamerabildern dargestellt. Fig. 7 zeigt ein Sendemodul 64, welches Teil des Bilderfassungsmoduls 12 ist. Das Sendemodul 64 ist über das Datennetzwerk, d.h. über Ethernet-Verbindungen 20 mit einer Vielzahl von Anzeigemodulen 16 verbunden. Ein Teil der Anzeigemodule 16 ist direkt an der Zentraleinheit 44 angeschlossen. Ein anderer Teil der Anzeigemodule 16 ist über einen weiteren Switch 18 mit dem Sendemodul 64 verbunden. Insbesondere über den weiteren Switch 18 können weitere Anzeigemodule 16 angeschlossen werden, so dass die Anzahl der Anzeigemodule gut skaliert werden kann.

Jedes der Anzeigemodule umfasst eine Bildverarbeitungseinheit 66.

Im Betrieb der Kamera 10 werden von dem Bilderfassungsmodul 12 erzeugte Bilddaten von dem Sendemodul 64 an die Anzeigemodule 16 übermittelt, wobei das Sendemodul 64 lediglich eine Skalierung und/oder Komprimierung der Bilddaten vornimmt. Von den Anzeigemodulen 16 werden die Bilddaten empfangen und mittels der Bildverarbeitungseinheit 66 jeweils verändert, bevor die Bilddaten auf Displays 68 der Anzeigemodule 16 dargestellt werden. Beispielsweise können durch die Bildverarbeitungseinheiten 66 ein Color Grading, eine Falschfarbendarstellung, das Einblenden von Overlays und dergleichen vorgenommen werden.

Durch das Netzwerk-basierte Ausspielen der Bilddaten ist es möglich, verschiedene Anzeigemodule 16 gleichzeitig mit Bilddaten zu versorgen, ohne dass die Rechenressourcen der Kamera 10 stark belastet werden. Eine flexible Gestaltung des Monitorings für verschiedene Anwendungszwecke wird so ermöglicht.

### Bezugszeichenliste

- 10: Kamera
- 12: Bilderfassungsmodul
- 14: Bedienmodul
- 16: Anzeigemodul
- 18: Switch
- 20: Ethernet-Verbindung
- 22: Objektivaufnahmemodul
- 24: Motor
- 26: Objektiv
- 28: Motorsteuerung
- 30: Kamera-Positionierungsmodul
- 32: Audiomodul
- 34: Prozessormodul
- 36: Konvertierungsmodul
- 38: Funkmodul
- 40: Anschlussmodul
- 42: Zweites Anzeigemodul
- 44: Zentraleinheit
- 46: Gehäuse
- 48: Kameramodul
- 50: Netzwerkschnittstelle
- 52: Modulelektronik
- 54: Speichermodul
- 56: Geräteprofil
- 58: Geräteklasse
- 60: Sub-Klasse
- 62: Informationen zum Funktionsumfang
- 64: Sendemodul
- 66: Bildverarbeitungseinheit
- 68: Display

## Patentansprüche

1. Verfahren zum Anschließen von Kameramodulen (12, 14, 16, 22, 30, 32, 34, 36, 38, 40, 42, 48, 64) an eine Kamera (10), bei welchem
- die Kamera (10) mit einem ersten Kameramodul (12, 14, 16, 22, 30, 32, 34, 36, 38, 40, 42, 48, 64) über eine Datenschnittstelle verbunden wird,
- das erste Kameramodul (12, 14, 16, 22, 30, 32, 34, 36, 38, 40, 42, 48, 64) ein Geräteprofil (56) über die Datenschnittstelle an die Kamera (10) überträgt, wobei das Geräteprofil (56) eine Geräteklasse (58) des ersten Kameramoduls (12, 14, 16, 22, 30, 32, 34, 36, 38, 40, 42, 48, 64) sowie Informationen zum Funktionsumfang (62) des ersten Kameramoduls (12, 14, 16, 22, 30, 32, 34, 36, 38, 40, 42, 48, 64) umfasst,
- die Kamera (10) mit einem zweiten Kameramodul (12, 14, 16, 22, 30, 32, 34, 36, 38, 40, 42, 48, 64) über die Datenschnittstelle verbunden wird,
- das zweite Kameramodul (12, 14, 16, 22, 30, 32, 34, 36, 38, 40, 42, 48, 64) ein Geräteprofil (56) über die Datenschnittstelle an die Kamera (10) überträgt, wobei das Geräteprofil (56) eine Geräteklasse (58) des zweiten Kameramoduls (12, 14, 16, 22, 30, 32, 34, 36, 38, 40, 42, 48, 64) sowie Informationen zum Funktionsumfang (62) des zweiten Kameramoduls (12, 14, 16, 22, 30, 32, 34, 36, 38, 40, 42, 48, 64) umfasst,
- die Kamera (10) ihre Betriebsparameter anhand der Geräteprofile (56) an das erste und zweite Kameramodul (12, 14, 16, 22, 30, 32, 34, 36, 38, 40, 42, 48, 64) anpasst, um das erste und zweite Kameramodul (12, 14, 16, 22, 30, 32, 34, 36, 38, 40, 42, 48, 64) in den Betrieb der Kamera (10) einzubinden,
**dadurch gekennzeichnet, dass**
die Betriebsparameter ein Rechtemanagement umfassen, welches definiert, welcher Benutzer und/oder welches Kameramodul (12, 14, 16, 22, 30, 32, 34, 36, 38, 40, 42, 48, 64) welche anderen Kameramodule (12, 14, 16, 22, 30, 32, 34, 36, 38, 40, 42, 48, 64) und in welchem Umfang steuern und/oder konfigurieren darf.

2. Verfahren nach Anspruch 1,
wobei die Kameramodule (12, 14, 16, 22, 30, 32, 34, 36, 38, 40, 42, 48, 64) die Geräteprofile (56) über die gleiche Datenschnittstelle an die Kamera (10) übertragen,
wobei die Datenschnittstelle ein Datennetzwerk (18, 20) umfasst, wobei das Datennetzwerk (18, 20) ein Ethernet-Netzwerk, ein Feldbus-Netzwerk oder ein Non-IP-Netzwerk (NIN) umfasst oder ein solches Netzwerk ist.

3. Verfahren nach zumindest einem der vorstehenden Ansprüche,
wobei die Kamera (10) eine modulare und insbesondere verteilte elektronische Kamera (10) ist, wobei die Kamera (10) ein Bilderfassungsmodul (12) umfassend einen Bildsensor sowie eine mit dem Bildsensor gekoppelte Bildverarbeitungseinheit aufweist,
wobei die Kamera (10) ein Bedienmodul (14) zur Steuerung und/oder Konfiguration der Kamera (10) umfasst, wobei das Bilderfassungsmodul (12), das Bedienmodul (14) und das Anzeigemodul (16) Kameramodule (12, 14, 16, 22, 30, 32, 34, 36, 38, 40, 42, 48, 64) sind, wobei das Bilderfassungsmodul (12), das Bedienmodul (14) und das Anzeigemodul (16) mittels eines Datennetzwerks (18, 20) miteinander verbunden sind, wobei das Datennetzwerk (18, 20) eine Verteileinheit (18) aufweist, welche Daten über das Datennetzwerk (18, 20) von den Kameramodulen (12, 14, 16, 22, 30, 32, 34, 36, 38, 40, 42, 48, 64) empfängt und Daten von einem der Kameramodule (12, 14, 16, 22, 30, 32, 34, 36, 38, 40, 42, 48, 64) zu zumindest einem der anderen Kameramodule (12, 14, 16, 22, 30, 32, 34, 36, 38, 40, 42, 48, 64) weiterleitet.

4. Verfahren nach zumindest einem der vorstehenden Ansprüche,
wobei das erste und/oder zweite Kameramodul (12, 14, 16, 22, 30, 32, 34, 36, 38, 40, 42, 48, 64)
- ein Bilderfassungsmodul (12),
- ein Bedienmodul (14),
- ein Speichermodul (54),
- ein Wiedergabemodul,
- ein Anzeigemodul (16),
- ein Audiomodul,
- ein Objektiv,
- ein Distanzmessungsmodul und/oder
- ein Batteriemodul
umfasst,
und/oder wobei das erste und/oder zwei Kameramodul (12, 14, 16, 22, 30, 32, 34, 36, 38, 40, 42, 48, 64) ein Universalbedienmodul umfasst, wobei
das Universalbedienmodul für die Bedienung verschiedener Kamerafunktionen konfigurierbar ist und das Universalbedienmodul bevorzugt ein Smartphone oder Tablet umfasst.

5. Verfahren nach zumindest einem der vorstehenden Ansprüche,
wobei die Informationen zum Funktionsumfang (62) des Bilderfassungsmoduls (12)
- einen Frameratenbereich (FPS-Bereich),
- eine Frameratengranularität (FPS-Granularität),
- einen Empfindlichkeitsbereich,
- mögliche Bildformate und/oder
- mögliche Auflösungen umfassen,
und/oder
wobei die Informationen zum Funktionsumfang (62) des Audiomoduls die vorhandenen Audioeingänge und/oder die vorhandenen Audioausgänge umfassen.

6. Verfahren nach zumindest einem der vorstehenden Ansprüche,
wobei das Geräteprofil (56) zumindest eines Kameramoduls (12, 14, 16, 22, 30, 32, 34, 36, 38, 40, 42, 48, 64) mehrere Geräteklassen (58) aufweist, wobei zu jeder Geräteklasse (58) Informationen zum Funktionsumfang (62) des Kameramoduls (12, 14, 16, 22, 30, 32, 34, 36, 38, 40, 42, 48, 64) erfasst sind, wobei die mehreren Geräteklassen (58) und die Informationen zum Funktionsumfang (62) an die Kamera (10) übertragen werden.

7. Verfahren nach zumindest einem der vorstehenden Ansprüche,
wobei das Geräteprofil (56) zumindest eines Kameramoduls (12, 14, 16, 22, 30, 32, 34, 36, 38, 40, 42, 48, 64) automatisch an die Kamera (10) übertragen wird und/oder
die Kamera (10) die Anpassung ihrer Betriebsparameter automatisch vornimmt.

8. Verfahren nach zumindest einem der vorstehenden Ansprüche,
wobei die Kamera (10) die Betriebsparameter derart anpasst, dass ein Stromverbrauch der Kamera (10) bei Bereitstellung der von den Kameramodulen (12, 14, 16, 22, 30, 32, 34, 36, 38, 40, 42, 48, 64) benötigten Ressourcen minimiert wird, wobei die Kamera aus den Geräteprofilen jeweils Mindestanforderungen ermittelt, wobei die Mindestanforderungen dann in den Betriebsparametern abgebildet werden.

9. Verfahren nach zumindest einem der vorstehenden Ansprüche,
wobei zumindest ein Geräteprofil (56) Abhängigkeiten von anderen Geräteprofilen (56) umfasst,
und/oder wobei bei fehlenden und/oder fehlerhaften und/oder unbekannten Geräteklassen (58) und/oder Informationen zum Funktionsumfang (62) eines Kameramoduls (12, 14, 16, 22, 30, 32, 34, 36, 38, 40, 42, 48, 64) ein Warnsignal ausgegeben wird.

10. Verfahren nach zumindest einem der vorstehenden Ansprüche,
wobei zumindest eines der Geräteprofile (56) Authentisierungsinformationen umfasst, welche bevorzugt eine Verifizierung des tatsächlich angeschlossenen Kameramoduls (12, 14, 16, 22, 30, 32, 34, 36, 38, 40, 42, 48, 64) ermöglichen.

11. Verfahren nach zumindest einem der vorstehenden Ansprüche,
wobei für die Kamera (10) ein Systemprofil aktiviert wird, wobei das Systemprofil einen Teil der Betriebsparameter der Kamera (10) setzt, wobei das Systemprofil bei der Anpassung der Betriebsparameter an die Geräteprofile (56) berücksichtigt wird.

12. Verfahren nach zumindest einem der vorstehenden Ansprüche,
wobei für die Kamera (10) ein Benutzerprofil aktiviert wird, wobei das Benutzerprofil einen Teil der Betriebsparameter der Kamera (10) setzt, wobei das Benutzerprofil bei der Anpassung der Betriebsparameter an die Geräteprofile (56) berücksichtigt wird.

13. Verfahren nach zumindest einem der Ansprüche 10 oder 11,
wobei bei Anschluss mehrerer Kameramodule (12, 14, 16, 22, 30, 32, 34, 36, 38, 40, 42, 48, 64) der gleichen Geräteklasse (58) eine Priorisierung der Kameramodule (12, 14, 16, 22, 30, 32, 34, 36, 38, 40, 42, 48, 64) der gleichen Geräteklasse (58) basierend auf den Geräteprofilen (56) und/oder dem gerade aktiven Systemprofil und/oder dem gerade aktiven Benutzerprofil erfolgt.

14. Kamerasystem umfassend eine Kamera (10) und zumindest ein erstes und ein zweites Kameramodul (12, 14, 16, 22, 30, 32, 34, 36, 38, 40, 42, 48, 64), wobei die Kamera (10) mit dem ersten und zweiten Kameramodul (12, 14, 16, 22, 30, 32, 34, 36, 38, 40, 42, 48, 64) über eine Datenschnittstelle verbunden ist, wobei
- das erste Kameramodul (12, 14, 16, 22, 30, 32, 34, 36, 38, 40, 42, 48, 64) ausgebildet ist, ein Geräteprofil (56) über die Datenschnittstelle an die Kamera (10) zu übertragen, wobei das Geräteprofil (56) eine Geräteklasse (58) des ersten Kameramoduls (12, 14, 16, 22, 30, 32, 34, 36, 38, 40, 42, 48, 64) sowie Informationen zum Funktionsumfang (62) des ersten Kameramoduls (12, 14, 16, 22, 30, 32, 34, 36, 38, 40, 42, 48, 64) umfasst,
- das zweite Kameramodul (12, 14, 16, 22, 30, 32, 34, 36, 38, 40, 42, 48, 64) ausgebildet ist, ein Geräteprofil (56) über die Datenschnittstelle an die Kamera (10) zu übertragen, wobei das Geräteprofil (56) eine Geräteklasse (58) des zweiten Kameramoduls (12, 14, 16, 22, 30, 32, 34, 36, 38, 40, 42, 48, 64) sowie Informationen zum Funktionsumfang (62) des zweiten Kameramoduls (12, 14, 16, 22, 30, 32, 34, 36, 38, 40, 42, 48, 64) umfasst,
- die Kamera (10) ausgebildet ist, ihre Betriebsparameter anhand der Geräteprofile (56) an die angeschlossenen Kameramodule (12, 14, 16, 22, 30, 32, 34, 36, 38, 40, 42, 48, 64) anzupassen,
**dadurch gekennzeichnet, dass**
die Betriebsparameter ein Rechtemanagement umfassen, welches definiert, welcher Benutzer und/oder welches Kameramodul (12, 14, 16, 22, 30, 32, 34, 36, 38, 40, 42, 48, 64) welche anderen Kameramodule (12, 14, 16, 22, 30, 32, 34, 36, 38, 40, 42, 48, 64) und in welchem Umfang steuern und/oder konfigurieren darf.

## Claims

1. A method of connecting camera modules (12, 14, 16, 22, 30, 32, 34, 36, 38, 40, 42, 48, 64) to a camera (10), in which
- the camera (10) is connected to a first camera module (12, 14, 16, 22, 30, 32, 34, 36, 38, 40, 42, 48, 64) via a data interface,
- the first camera module (12, 14, 16, 22, 30, 32, 34, 36, 38, 40, 42, 48, 64) transmits a device profile (56) via the data interface to the camera (10), wherein the device profile (56) comprises a device class (58) of the first camera module (12, 14, 16, 22, 30, 32, 34, 36, 38, 40, 42, 48, 64) and information about the functional scope (62) of the first camera module (12, 14, 16, 22, 30, 32, 34, 36, 38, 40, 42, 48, 64),
- the camera (10) is connected to a second camera module (12, 14, 16, 22, 30, 32, 34, 36, 38, 40, 42, 48, 64) via the data interface,
- the second camera module (12, 14, 16, 22, 30, 32, 34, 36, 38, 40, 42, 48, 64) transmits a device profile (56) via the data interface to the camera (10), wherein the device profile (56) comprises a device class (58) of the second camera module (12, 14, 16, 22, 30, 32, 34, 36, 38, 40, 42, 48, 64) and information about the functional scope (62) of the second camera module (12, 14, 16, 22, 30, 32, 34, 36, 38, 40, 42, 48, 64),
- the camera (10) adapts its operating parameters to the first and second camera module (12, 14, 16, 22, 30, 32, 34, 36, 38, 40, 42, 48, 64) based on the device profiles (56) in order to integrate the first and second camera module (12, 14, 16, 22, 30, 32, 34, 36, 38, 40, 42, 48, 64) into the operation of the camera (10),
**characterized in that**
the operating parameters comprise a rights management that defines which user and/or which camera module (12, 14, 16, 22, 30, 32, 34, 36, 38, 40, 42, 48, 64) may control and/or configure which other camera modules (12, 14, 16, 22, 30, 32, 34, 36, 38, 40, 42, 48, 64) and to what extent.

2. A method according to claim 1,
wherein the camera modules (12, 14, 16, 22, 30, 32, 34, 36, 38, 40, 42, 48, 64) transmit the device profiles (56) via the same data interface to the camera (10),
wherein the data interface comprises a data network (18, 20), wherein the data network (18, 20) comprises an Ethernet network, a fieldbus network or a non-IP network (NIN) or is such a network.

3. A method according to at least one of the preceding claims,
wherein the camera (10) is a modular electronic camera (10), and in particular a distributed electronic camera (10), wherein the camera (10) has an image acquisition module (12) comprising an image sensor and an image processing unit coupled to the image sensor,
wherein the camera (10) comprises an operating module (14) for controlling and/or configuring the camera (10), wherein the image acquisition module (12), the operating module (14) and the display module (16) are camera modules (12, 14, 16, 22, 30, 32, 34, 36, 38, 40, 42, 48, 64), wherein the image acquisition module (12), the operating module (14) and the display module (16) are connected to one another by means of a data network (18, 20), wherein the data network (18, 20) has a distribution unit (18) which receives data via the data network (18, 20) from the camera modules (12, 14, 16, 22, 30, 32, 34, 36, 38, 40, 42, 48, 64) and forwards data from one of the camera modules (12, 14, 16, 22, 30, 32, 34, 36, 38, 40, 42, 48, 64) to at least one of the other camera modules (12, 14, 16, 22, 30, 32, 34, 36, 38, 40, 42, 48, 64).

4. A method according to at least one of the preceding claims,
wherein the first and/or second camera module (12, 14, 16, 22, 30, 32, 34, 36, 38, 40, 42, 48, 64) comprises/comprise
- an image acquisition module (12),
- an operating module (14),
- a memory module (54),
- a playback module,
- a display module (16),
- an audio module,
- a lens,
- a distance measurement module, and/or
- a battery module,
and/or wherein the first and/or second camera module (12, 14, 16, 22, 30, 32, 34, 36, 38, 40, 42, 48, 64) comprises/comprise a universal operating module, wherein the universal operating module can be configured for the operation of different camera functions and the universal operating module preferably comprises a smartphone or a tablet.

5. A method according to at least one of the preceding claims,
wherein the information about the functional scope (62) of the image acquisition module (12) comprises
- a frame rate range (FPS range),
- a frame rate granularity (FPS granularity),
- a sensitivity range,
- possible image formats, and/or
- possible resolutions,
and/or
wherein the information about the functional scope (62) of the audio module comprises the audio inputs present and/or the audio outputs present.

6. A method according to at least one of the preceding claims,
wherein the device profile (56) of at least one camera module (12, 14, 16, 22, 30, 32, 34, 36, 38, 40, 42, 48, 64) has a plurality of device classes (58), wherein information about the functional scope (62) of the camera module (12, 14, 16, 22, 30, 32, 34, 36, 38, 40, 42, 48, 64) is acquired for each device class (58), wherein the plurality of device classes (58) and the information about the functional scope (62) are transmitted to the camera (10).

7. A method according to at least one of the preceding claims,
wherein the device profile (56) of at least one camera module (12, 14, 16, 22, 30, 32, 34, 36, 38, 40, 42, 48, 64) is automatically transmitted to the camera (10) and/or
the camera (10) automatically performs the adaptation of its operating parameters.

8. A method according to at least one of the preceding claims,
wherein the camera (10) adapts the operating parameters such that a power consumption of the camera (10) is minimized when providing the resources required by the camera modules (12, 14, 16, 22, 30, 32, 34, 36, 38, 40, 42, 48, 64), wherein the camera determines minimum requirements from the device profiles in each case, wherein the minimum requirements are then mapped in the operating parameters.

9. A method according to at least one of the preceding claims,
wherein at least one device profile (56) comprises dependencies on other device profiles (56),
and/or wherein a warning signal is output in the event of missing and/or incorrect and/or unknown device classes (58) and/or information about the functional scope (62) of a camera module (12, 14, 16, 22, 30, 32, 34, 36, 38, 40, 42, 48, 64).

10. A method according to at least one of the preceding claims,
wherein at least one of the device profiles (56) comprises authentication information which preferably enables a verification of the camera module (12, 14, 16, 22, 30, 32, 34, 36, 38, 40, 42, 48, 64) that is actually connected.

11. A method according to at least one of the preceding claims,
wherein a system profile is activated for the camera (10), wherein the system profile sets some of the operating parameters of the camera (10), wherein the system profile is considered when adapting the operating parameters to the device profiles (56).

12. A method according to at least one of the preceding claims,
wherein a user profile is activated for the camera (10), wherein the user profile sets some of the operating parameters of the camera (10), wherein the user profile is considered when adapting the operating parameters to the device profiles (56).

13. A method according to at least one of the claims 10 or 11,
wherein, when a plurality of camera modules (12, 14, 16, 22, 30, 32, 34, 36, 38, 40, 42, 48, 64) of the same device class (58) are connected, a prioritization of the camera modules (12, 14, 16, 22, 30, 32, 34, 36, 38, 40, 42, 48, 64) of the same device class (58) based on the device profiles (56) and/or the currently active system profile and/or the currently active user profile takes place.

14. A camera system comprising a camera (10) and at least a first and a second camera module (12, 14, 16, 22, 30, 32, 34, 36, 38, 40, 42, 48, 64), wherein the camera (10) is connected to the first and second camera module (12, 14, 16, 22, 30, 32, 34, 36, 38, 40, 42, 48, 64) via a data interface, wherein
- the first camera module (12, 14, 16, 22, 30, 32, 34, 36, 38, 40, 42, 48, 64) is configured to transmit a device profile (56) via the data interface to the camera (10), wherein the device profile (56) comprises a device class (58) of the first camera module (12, 14, 16, 22, 30, 32, 34, 36, 38, 40, 42, 48, 64) and information about the functional scope (62) of the first camera module (12, 14, 16, 22, 30, 32, 34, 36, 38, 40, 42, 48, 64),
- the second camera module (12, 14, 16, 22, 30, 32, 34, 36, 38, 40, 42, 48, 64) is configured to transmit a device profile (56) via the data interface to the camera (10), wherein the device profile (56) comprises a device class (58) of the second camera module (12, 14, 16, 22, 30, 32, 34, 36, 38, 40, 42, 48, 64) and information about the functional scope (62) of the second camera module (12, 14, 16, 22, 30, 32, 34, 36, 38, 40, 42, 48, 64),
- the camera (10) is configured to adapt its operating parameters to the connected camera modules (12, 14, 16, 22, 30, 32, 34, 36, 38, 40, 42, 48, 64) based on the device profiles (56),
**characterized in that**
the operating parameters comprise a rights management that defines which user and/or which camera module (12, 14, 16, 22, 30, 32, 34, 36, 38, 40, 42, 48, 64) may control and/or configure which other camera modules (12, 14, 16, 22, 30, 32, 34, 36, 38, 40, 42, 48, 64) and to what extent.

## Revendications

1. Procédé de raccordement de modules de caméra (12, 14, 16, 22, 30, 32, 34, 36, 38, 40, 42, 48, 64) à une caméra (10), dans lequel
- la caméra (10) est reliée à un premier module de caméra (12, 14, 16, 22, 30, 32, 34, 36, 38, 40, 42, 48, 64) via une interface de données,
- le premier module de caméra (12, 14, 16, 22, 30, 32, 34, 36, 38, 40, 42, 48, 64) transmet un profil d'appareil (56) à la caméra (10) via l'interface de données, le profil d'appareil (56) comprenant une classe d'appareil (58) du premier module de caméra (12, 14, 16, 22, 30, 32, 34, 36, 38, 40, 42, 48, 64) ainsi que des informations sur l'étendue des fonctionnalités (62) du premier module de caméra (12, 14, 16, 22, 30, 32, 34, 36, 38, 40, 42, 48, 64),
- la caméra (10) est reliée à un deuxième module de caméra (12, 14, 16, 22, 30, 32, 34, 36, 38, 40, 42, 48, 64) via l'interface de données,
- le deuxième module de caméra (12, 14, 16, 22, 30, 32, 34, 36, 38, 40, 42, 48, 64) transmet un profil d'appareil (56) à la caméra (10) via l'interface de données, le profil d'appareil (56) comprenant une classe d'appareil (58) du deuxième module de caméra (12, 14, 16, 22, 30, 32, 34, 36, 38, 40, 42, 48, 64) ainsi que des informations sur l'étendue des fonctionnalités (62) du deuxième module de caméra (12, 14, 16, 22, 30, 32, 34, 36, 38, 40, 42, 48, 64),
- la caméra (10) adapte ses paramètres de fonctionnement au premier et deuxième module de caméra (12, 14, 16, 22, 30, 32, 34, 36, 38, 40, 42, 48, 64) à l'aide des profils d'appareils (56) afin d'intégrer le premier et deuxième module de caméra (12, 14, 16, 22, 30, 32, 34, 36, 38, 40, 42, 48, 64) dans le fonctionnement de la caméra (10),
**caractérisé en ce que**
les paramètres de fonctionnement comprennent une gestion des droits qui définit quel utilisateur et/ou quel module de caméra (12, 14, 16, 22, 30, 32, 34, 36, 38, 40, 42, 48, 64) est autorisé à contrôler et/ou configurer quels autres modules de caméra (12, 14, 16, 22, 30, 32, 34, 36, 38, 40, 42, 48, 64) et dans quelle mesure il est autorisé à les contrôler et/ou à les configurer.

2. Procédé selon la revendication 1,
dans lequel les modules de caméra (12, 14, 16, 22, 30, 32, 34, 36, 38, 40, 42, 48, 64) transmettent les profils d'appareils (56) à la caméra (10) via la même interface de données,
l'interface de données comprenant un réseau de données (18, 20), le réseau de données (18, 20) comprenant un réseau Ethernet, un réseau de bus de terrain ou un réseau non IP (NIN), ou étant un tel réseau.

3. Procédé selon au moins l'une des revendications précédentes,
la caméra (10) étant une caméra électronique modulaire et notamment distribuée, la caméra (10) comportant un module de capture d'images (12) comprenant un capteur d'images ainsi qu'une unité de traitement d'images couplée au capteur d'images,
la caméra (10) comprenant un module de commande (14) pour la commande et/ou la configuration de la caméra (10), le module de capture d'images (12), le module de commande (14) et le module d'affichage (16) étant des modules de caméra (12, 14, 16, 22, 30, 32, 34, 36, 38, 40, 42, 48, 64), le module de capture d'images (12), le module de commande (14) et le module d'affichage (16) étant reliés entre eux au moyen d'un réseau de données (18, 20), le réseau de données (18, 20) comportant une unité de distribution (18) qui reçoit des données provenant des modules de caméra (12, 14, 16, 22, 30, 32, 34, 36, 38, 40, 42, 48, 64) via le réseau de données (18, 20) et transmet des données provenant de l'un des modules de caméra (12, 14, 16, 22, 30, 32, 34, 36, 38, 40, 42, 48, 64) vers au moins l'un des autres modules de caméra (12, 14, 16, 22, 30, 32, 34, 36, 38, 40, 42, 48, 64).

4. Procédé selon au moins l'une des revendications précédentes,
dans lequel le premier et/ou le deuxième module de caméra (12, 14, 16, 22, 30, 32, 34, 36, 38, 40, 42, 48, 64) comprend
- un module de capture d'images (12),
- un module de commande (14),
- un module de stockage (54),
- un module de lecture,
- un module d'affichage (16),
- un module audio,
- un objectif,
- un module de mesure de distance et/ou
- un module de batterie,
et/ou dans lequel le premier et/ou deuxième module de caméra (12, 14, 16, 22, 30, 32, 34, 36, 38, 40, 42, 48, 64) comprend un module de commande universel, ledit module de commande universel pouvant être configuré pour la commande de différentes fonctions de caméra et ledit module de commande universel comprenant de préférence un smartphone ou une tablette.

5. Procédé selon au moins l'une des revendications précédentes,
dans lequel les informations sur l'étendue des fonctionnalités (62) du module de capture d'images (12) comprennent
- une plage de fréquences d'images (plage FPS),
- une granularité de fréquence d'images (granularité de FPS),
- une plage de sensibilité,
- des formats d'image possibles et/ou
- des résolutions possibles,
et/ou
dans lequel les informations sur l'étendue des fonctionnalités (62) du module audio comprennent les entrées audio disponibles et/ou les sorties audio disponibles.

6. Procédé selon au moins l'une des revendications précédentes,
dans lequel le profil de l'appareil (56) d'au moins un module de caméra (12, 14, 16, 22, 30, 32, 34, 36, 38, 40, 42, 48, 64) comprend plusieurs classes d'appareils (58), des informations sur l'étendue des fonctionnalités (62) du module de caméra (12, 14, 16, 22, 30, 32, 34, 36, 38, 40, 42, 48, 64) étant enregistrées pour chaque classe d'appareil (58), les plusieurs classes d'appareils (58) et les informations sur l'étendue des fonctionnalités (62) étant transmises à la caméra (10).

7. Procédé selon au moins l'une des revendications précédentes,
dans lequel le profil de l'appareil (56) d'au moins un module de caméra (12, 14, 16, 22, 30, 32, 34, 36, 38, 40, 42, 48, 64) est transmis automatiquement à la caméra (10) et/ou
la caméra (10) procède automatiquement à l'adaptation de ses paramètres de fonctionnement.

8. Procédé selon au moins l'une des revendications précédentes,
dans lequel la caméra (10) adapte les paramètres de fonctionnement de telle façon que la consommation électrique de la caméra (10) soit minimisée lors de la mise à disposition des ressources requises par les modules de caméra (12, 14, 16, 22, 30, 32, 34, 36, 38, 40, 42, 48, 64), la caméra déterminant les exigences minimales à partir des profils d'appareils, lesdites exigences minimales étant ensuite reflétées dans les paramètres de fonctionnement.

9. Procédé selon au moins l'une des revendications précédentes,
dans lequel au moins un profil d'appareil (56) comprend des dépendances vis-à-vis d'autres profils d'appareils (56),
et/ou dans lequel, en cas de classes d'appareils (58) et/ou d'informations sur l'étendue des fonctionnalités (62) d'un module de caméra (12, 14, 16, 22, 30, 32, 34, 36, 38, 40, 42, 48, 64) manquantes et/ou erronées et/ou inconnues, un signal d'avertissement est émis.

10. Procédé selon au moins l'une des revendications précédentes,
dans lequel au moins l'un des profils d'appareils (56) comprend des informations d'authentification qui permettent de préférence une vérification du module de caméra (12, 14, 16, 22, 30, 32, 34, 36, 38, 40, 42, 48, 64) effectivement raccordé.

11. Procédé selon au moins l'une des revendications précédentes,
dans lequel un profil système est activé pour la caméra (10), ledit profil système définissant une partie des paramètres de fonctionnement de la caméra (10), ledit profil système étant pris en compte lors de l'adaptation des paramètres de fonctionnement aux profils d'appareils (56).

12. Procédé selon au moins l'une des revendications précédentes,
dans lequel un profil utilisateur est activé pour la caméra (10), ledit profil utilisateur définissant une partie des paramètres de fonctionnement de la caméra (10), le profil utilisateur étant pris en compte lors de l'adaptation des paramètres de fonctionnement aux profils d'appareils (56).

13. Procédé selon au moins l'une des revendications 10 ou 11,
dans lequel, en cas de raccordement de plusieurs modules de caméra (12, 14, 16, 22, 30, 32, 34, 36, 38, 40, 42, 48, 64) de la même classe d'appareil (58), une hiérarchisation des modules de caméra (12, 14, 16, 22, 30, 32, 34, 36, 38, 40, 42, 48, 64) de la même classe d'appareil (58) est effectuée sur la base des profils d'appareils (56) et/ou du profil système actuellement actif et/ou du profil utilisateur actuellement actif.

14. Système de caméra comprenant une caméra (10) et au moins un premier et un deuxième module de caméra (12, 14, 16, 22, 30, 32, 34, 36, 38, 40, 42, 48, 64), la caméra (10) étant reliée au premier et deuxième module de caméra (12, 14, 16, 22, 30, 32, 34, 36, 38, 40, 42, 48, 64) via une interface de données, dans lequel
- le premier module de caméra (12, 14, 16, 22, 30, 32, 34, 36, 38, 40, 42, 48, 64) est configuré pour transmettre un profil d'appareil (56) à la caméra (10) via l'interface de données, le profil d'appareil (56) comprenant une classe d'appareil (58) du premier module de caméra (12, 14, 16, 22, 30, 32, 34, 36, 38, 40, 42, 48, 64) ainsi que des informations sur l'étendue des fonctionnalités (62) du premier module de caméra (12, 14, 16, 22, 30, 32, 34, 36, 38, 40, 42, 48, 64),
- le deuxième module de caméra (12, 14, 16, 22, 30, 32, 34, 36, 38, 40, 42, 48, 64) est configuré pour transmettre un profil d'appareil (56) à la caméra (10) via l'interface de données, le profil d'appareil (56) comprenant une classe d'appareil (58) du deuxième module de caméra (12, 14, 16, 22, 30, 32, 34, 36, 38, 40, 42, 48, 64) ainsi que des informations sur l'étendue des fonctionnalités (62) du deuxième module de caméra (12, 14, 16, 22, 30, 32, 34, 36, 38, 40, 42, 48, 64),
- la caméra (10) est configurée pour adapter ses paramètres de fonctionnement aux modules de caméra raccordés (12, 14, 16, 22, 30, 32, 34, 36, 38, 40, 42, 48, 64) à l'aide des profils d'appareils (56),
**caractérisé en ce que**
les paramètres de fonctionnement comprennent une gestion des droits qui définit quel utilisateur et/ou quel module de caméra (12, 14, 16, 22, 30, 32, 34, 36, 38, 40, 42, 48, 64) est autorisé à contrôler et/ou configurer quels autres modules de caméra (12, 14, 16, 22, 30, 32, 34, 36, 38, 40, 42, 48, 64) et dans quelle mesure il est autorisé à les contrôler et/ou à les configurer.
